# EUROPÄISCHE PATENTSCHRIFT

(11) **EP 1 738 649 B1**
(45) Veröffentlichungstag und Bekanntmachung des Hinweises auf die Patenterteilung: **23.01.2008**
(21) Anmeldenummer: 05014221.5
(22) Anmeldetag: 30.06.2005
(51) Int. Cl.: A22C 13/00

(54) **Vorrichtung und Verfahren zum Herstellen eines Wurststrangs mit beliebiger geometrischer Aussenkontur**
Device and method for producing a sausage strand of desired cross-section
Procédé et dispositif pour produire un chapelet de saucisses ayant un section au choix

(43) Veröffentlichungstag der Anmeldung: 03.01.2007
(73) Patentinhaber: Albert Handtmann Maschinenfabrik GmbH & Co. KG, 88400 Biberach (DE)
(72) Erfinder: Müller, Gerhard, 88433 Schemmerhofen (DE); Baechtle, Manfred, 88433 Schemmerhofen (DE)
(74) Vertreter: Grünecker, Kinkeldey, Stockmair & Schwanhäusser Anwaltssozietät

(56) Entgegenhaltungen:
- EP-A- 1 371 293
- EP-A1- 0 153 094
- EP-A1- 1 114 587
- US-A- 6 153 234

## Beschreibung

Die Erfindung betrifft eine Vorrichtung zum Herstellen eines Wurststrangs sowie ein entsprechendes Herstellungsverfahren.

Aus der EP 1114587 B1 ist bereits eine Vorrichtung zum Herstellen eines Wurststrangs aus pastöser Masse bekannt, mit einem Koextrusionskopf zum koextrudieren der pastösen Masse und einer die Masse umgebenden Außenmasse, wobei der Koextrusionskopf eine Kanüle als Füllrohr aufweist zum Ausstoßen von pastöser Masse sowie eine Koextrusionsdüse, wobei die Kanüle in ein Außenrohr ragt und ein Extrusionsspalt zwischen dem Außenrohr und der Kanüle gebildet wird. Das Füllrohr weist zumindest im Bereich des Ausstoßendes eine von der Kreisform abweichende Querschnittsform auf und der Extrusionsspalt eine entsprechende von der Kreisform abweichende Querschnittsform.

Eine Vorrichtung zum Herstellen eines Wurststranges ist bereits aus der Druckschrift EP 1371293 bekannt. Diese Druckschrift zeigt eine Vorrichtung zum Herstellen von kontinuierlich erzeugten Wurststrängen mit koextrudierter Wursthülle und zylindrischer Außenkontur. Hier wird mit einem Extrudierkopf, der ein Füllrohr für die Wurstmasse sowie eine Extrusionsdüse für das Hüllenmaterial aufweist, die pastöse Masse mit einer die Masse umgebenden Hülle in Strangform koextrudiert.

Nach Austritt des Produktstranges aus dem Extrudierkopf muss die Koextrudierte Wursthülle verfestigt werden. Dazu wird die koextrudierte Wursthülle beispielsweise einer Salzlösung ausgesetzt.

Die bekannten Verfahren zur Wurstherstellung mit kontinuierlich erzeugtem endlosen Wurststrang und koextrudierter Wursthülle sind dabei bezüglich der Formgestaltung an die traditionelle Herstellung von Würsten mit vorkonfektionierten Därmen (z.B. Darmraupen aus Kunst- oder Collagendarm) angelehnt.

Bisher ist es nicht möglich, mit solchen Koextrusionsköpfen in einem Herstellungsschritt einen Wurststrang mit frei definierbarer Geometrie der Außenkontur zu erzeugen. Werden z.B. Landjäger mit viereckigem Querschnitt hergestellt, so worden diese bisher in einem nachfolgenden Prozessschritt In die rechteckige Form gebracht.

Es ist daher Aufgabe der vorliegenden Erfindung, eine Vorrichtung und ein Verfahren bereitzustellen, die auf einfache Art und Weise die Herstellung eines Wurststrangs mit koextrudierter Wursthülle und beliebiger geometrischer Außenkontur ermöglichen.

Erfindungsgemäß wird die Aufgabe durch die Merkmale der Ansprüche 1 und 6 gelöst.

Dadurch, dass gemäß der vorliegenden Erfindung die pastöse Masse durch ein Ausstoßende des Füllrohrs in einer von der Kreisform abweichenden Querschnittsform ausgestoßen wird und gleichzeitig die die Masse umgebende Hülle in einer entsprechenden Form um die pastöse Masse extrudiert wird, kann auf einfache Art und Weise ein Wurststrang mit beliebiger geometrischer Außenkontur hergestellt werden. Dadurch kann der bislang nachfolgende Prozessschritt, in dem ein Wurststrang mit zylindrischer Außenkontur in eine andere Form, beispielsweise eine rechteckige Form gebracht wird, entfallen, wodurch die Herstellung vereinfacht und beschleunigt werden kann und sich außerdem ein geringerer Vorrichtungsaufwand ergibt, da keine zusätzliche Einrichtung zur Formgebung notwendig ist. Es wird nur ein Extrusionskopf benötigt, dessen Füllrohr und deren Extrudierdüse ein Ausstoßende aufweist, dessen Querschnittsform von der Kreisform abweicht. Durch Formgestaltung des Koextrusionskopfes wird also auf einfache Art und Weise eine im Querschnitt beliebige Kontur des Wurststrangs hergestellt.

Die Extrusionsdüse ist derart um das Ausstoßende des Füllrohrs angeordnet, dass sich der Extrusionsspalt zwischen dem Füllrohr und einer Wandung der Extrudierdüse bildet. Durch diese Anordnung kann Platz und Material gespart werden, da die Wand des Füllrohrs den Düsenhohlraum, der mit der Massezuführung für das Hüllenmaterial verbunden ist, begrenzen kann.

In vorteilhafter Weise ist der Extrusionsspalt zwischen Füllrohr und Wandung der Extrusionsdüse, d.h. an der Austrittsstelle über den gesamten Umfang gleich breit. Somit ist die Produktion einer gleichmäßigen Hülle gewährleistet.

Mit der erfindungsgemäßen Vorrichtung können beispielsweise dreieckförmige, quadratische n-eckige, ovale oder unregelmäßig geformte Außenkonturen der Wurststränge gebildet werden.

Es ist vorteilhaft, wenn das Füllrohr und die Extrudierdüse axial zueinander verschiebbar sind, um die Breite des Extrusionsspalts einzustellen. Somit können Wursthüllenmassen mit unterschiedlicher Konsistenz und Wursthüllen verschiedener Dicke verarbeitet werden.

Die Dicke der Wursthülle kann auch durch Einstellen der Zufuhr des Hüllenmaterials durch Druck- oder Mengenregelung eingestellt werden.

In vorteilhafter Weise ist die Extrudierdüse zusammen mit dem Füllrohr drehbar gelagert.

Somit kann sich der Extrusionskopf gegenüber dem bereits ausgestoßenen Wurststrang drehen, so dass Würste mit einer von der zylindrischen Außenkontur abweichenden Außenkontur hergestellt werden können, die zudem um ihre Längsachse verdreht sind, was zu einer besonders ansprechenden Form der erzeugten Würste führt.

Die vorliegende Erfindung wird nachfolgend näher unter Bezugnahme der begleitenden Figuren erläutert. Dabei zeigt:
Fig. 1 eine schematische Darstellung der Vorrichtung gemäß der vorliegenden Erfindung.
Fig. 2a zeigt einen Querschnitt durch ein erstes Ausführungsbeispiel eines Extrudierkopfes gemäß der vorliegenden Erfindung.
Fig. 2b zeigt eine Vergrößerung des in Fig. 2a gezeigten Ausschnitts B.
Fig. 3a zeigt einen Querschnitt eines weiteren Ausführungsbeispiels eines Extrudierkopfes gemäß der vorliegenden Erfindung.
Fig. 3b zeigt eine Vergrößerung des Ausschnittes B in Fig. 3a.
Fig. 4 zeigt schematisch einen Querschnitt entlang der Linie I - I in Figur 2a und 3a für vier Extrusionsköpfe mit unterschiedlicher Formgestaltung.
Fig. 5 zeigt in perspektivischer Darstellung abgeteilte Würste mit unterschiedlicher Außenkontur.
Fig. 6 zeigt schematisch einen Querschnitt entlang der Linie II-II in Fig. 3a.

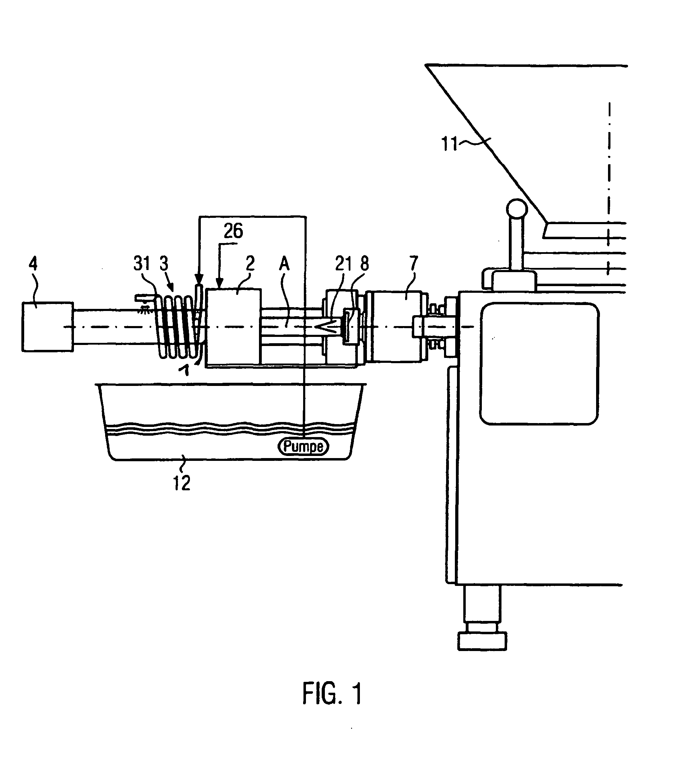

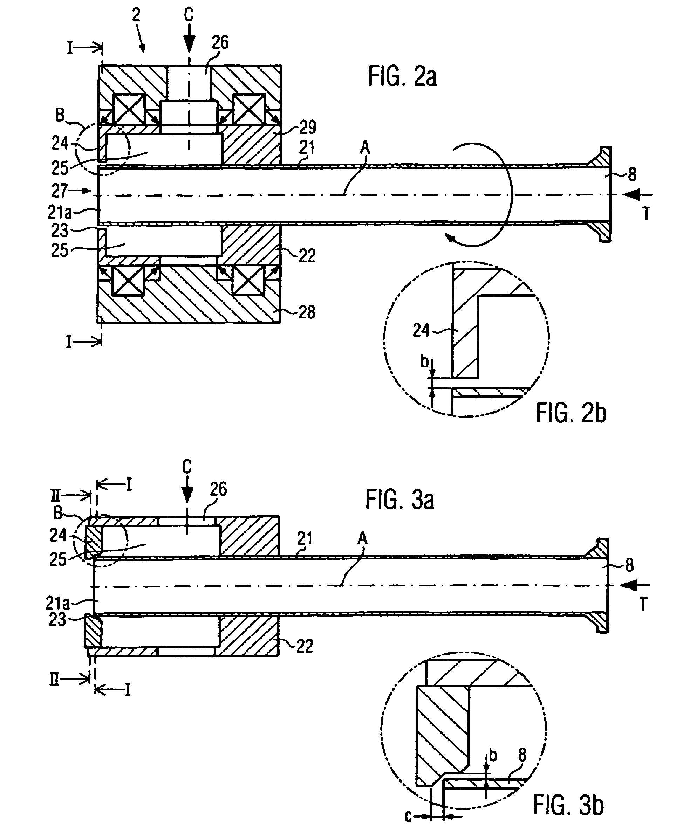

Wie in Fig. 1 gezeigt ist, weist die Vorrichtung einen Vorratsbehälter 11 auf, über welchen eine pastöse Masse, wie beispielsweise Wurstbrät dem Füllrohr 21 zugeführt werden kann. Das Wurstbrät wird über eine Öffnung 8 in das Füllrohr 21 unter Druck eingeführt und dem Extrudierkopf 2 zugeführt. Der Extrudierkopf 2 ist mit einer Zufuhr 26 (siehe auch Fig. 2 und 3) für eine Außenmasse (z.B. Alginat), d.h. für das Hüllenmaterial, verbunden. Im Extrudierkopf 2 kann gleichzeitig die pastöse Masse in Transportrichtung T und Hüllenmaterial durch die Zufuhr 26 als Außenmasse zugeführt werden. Weiter zeigt Fig. 1, dass der aus dem Extrudierkopf 2 austretende koextrudierte Wurststrang (1) durch eine im Anschluss an den Extrudierkopf 2 vorgesehene Einrichtung zum Verfestigen des Hüllenmaterials 3 tritt. In dieser Ausführungsform ist die Verfestigungseinrichtung 3 durch die Ringdusche 31 gebildet, durch die der Wurststrang hindurchgeführt werden kann. Die Ringdusche 31 ist mit einer Zufuhr für eine Solelösung verbunden, die mittels einer Pumpe aus einem weiteren Vorratsbehälter 12 der Ringdusche 31 zugeführt wird. Nach Austritt des Wurststrangs aus der Verfestigungseinrichtung 3 weist die Wursthaut eine hohe Stabilität auf.

In Förderrichtung nach der Verfestigungseinrichtung 3 können unterschiedliche Einrichtungen 4 nachgeordnet werden, auf die in dieser Anmeldung nicht im Detail eingegangen werden soll. Beispielsweise kann hier eine Abdreheinrichtung vorgesehen sein, die den erzeugten Wurststrang um die Längsachse A verdreht. Eine Trenneinheit, die beispielsweise die pastöse Masse zum Unterteilen des Wurststrangs in Einzelwürste abteilt und/oder eine Fördereinrichtung, die den erzeugten Wurststrang bzw. die Einzelwürste in Transportrichtung T weiter fördert.

Bei dem in Fig. 1 gezeigten Ausführungsbeispiel kann das Füllrohr zusammen mit dem Koextrusionskopf um die Achse A beispielsweise durch die Antriebseinheit 7 gedreht werden. Das Füllrohr 21 kann aber genauso gut zusammen mit dem Extrusionskopf 2 ohne Antrieb drehbar angeordnet werden oder jedoch fest nicht drehbar installiert sein.

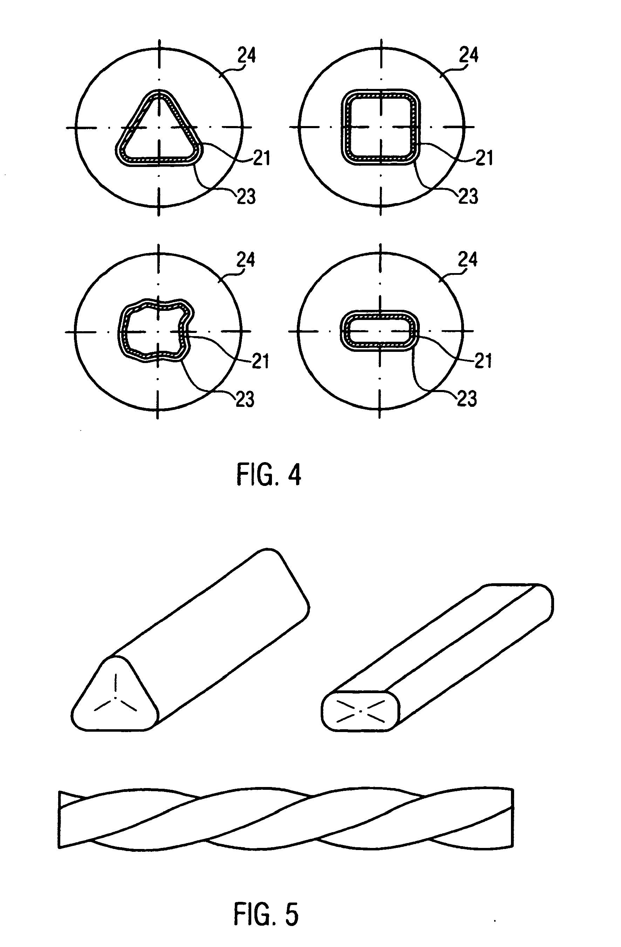

Fig. 2a und 2b zeigen in Zusammenhang mit der Fig. 4 eine Ausführungsform der vorliegenden Erfindung. Der in Fig. 2a gezeigte Extrudierkopf 2 umfasst hier zumindest den Endbereich des Füllrohrs 21, das an seinem Ausstoßende 21a die pastöse Masse ausstößt sowie eine Extrudierdüse 22 für das Hüllenmaterial. In diesem Ausführungsbeispiel ist die Extrudierdüse 22 derart um das Füllrohr 21 angeordnet, dass sich der Extrusionsspalt 23 für das Hüllenmaterial zwischen dem Füllrohr 21 und einer Wandung 24 der Extrudierdüse 22 bildet. Die Wandung 24 befindet sich hier im Bereich des Ausstoßendes 21 a des Füllrohrs. In dieser Ausführungsform schließt die Wandung 24 im Wesentlichen mit dem Ausstoßende des Füllrohrs 21 ab und der Extrusionsspalt 23, an dem das Hüllenmaterial austritt, erstreckt sich im Wesentlichen radial zur Längsachse A des Füllrohrs 21. Der Düsenhohlraum 25, der mit der Zufuhr 26 für das Hüllenmaterial in Verbindung steht, wird einerseits von der Extrudierdüse 22, d.h. durch deren Wandungen 24 und 29 sowie durch das Füllrohr 21 begrenzt. Das Füllrohr 21 und die Extrudierdüse 22 kontaktieren sich im Bereich 29 der Wandung. Bei dieser Ausführungsform ist die Extrusionsdüse 22 zusammen mit dem Füllrohr 21 in einem Gehäuse 28 drehbar um die Achse A gelagert, so dass das Füllrohr 21 zusammen mit der Düse 22, wie durch den Pfeil dargestellt ist, gedreht werden kann. Wie aus der Fig. 2b hervorgeht, weist der Extrusionsspalt 23, d.h. hier der Abstand zwischen Füllrohr und Extrudierdüse 22 eine Breite b auf. Durch den Spalt 23 kann das Hüllenmaterial derart extrudiert werden, dass es sich um die vom Füllrohr 21 ausgestoßene pastösen Masse zur Erzeugung des Wurststranges legt. Dabei kann das Hüllenmaterial entlang der Pfeilrichtung C nachgeführt werden, während die pastöse Masse entlang der Pfeilrichtung T nachgeführt wird.

Gemäß der vorliegenden Erfindung weist nun der Querschnitt des Füllrohrs 21 zumindest im Bereich des Ausstoßendes 21 a eine von der Kreisform abweichende Querschnittsform auf wie beispielsweise aus Fig. 4 hervorgeht. Das Füllrohr 21 weist sowohl eine Außenkontur auf, die im Querschnitt von der Kreisform abweicht, als auch eine entsprechend geformte Innenkontur auf, damit die pastöse Masse in der entsprechenden Form ausgestoßen werden kann. In Fig. 4 ist beispielsweise eine dreieckförmige, viereckförmige, quadratische und unregelmäßig geformte Form des Füllrohrs 21 gezeigt. Innen-und Außenkontur des Füllrohrs 21 weisen die gleiche konzentrische Form auf. Es kann entweder das gesamte Füllrohr 21 entsprechend ausgeformt werden oder aber nur der dem Ausstoßende 21 a des Füllrohrs zugewandte Teil, der beispielsweise auch auf ein bereits bestehendes zylindrisches Füllrohr angebracht, insbesondere aufgesteckt werden kann. Die Querschnittsformen sind nicht auf die in Fig. 4 gezeigten Querschnittsformen beschränkt, sondern können eine beliebige unregelmäßige, unsymmetrische oder n-eckige Form aufweisen. Wie aus Fig. 4 hervorgeht, weist auch der Spalt 23 eine dem Querschnitt des Füllrohrs 21 entsprechende Querschnittsform auf. Auch hier hat der umlaufende Extrusionsspalt 23 eine vom Kreisring abweichende Querschnittsform. Die Breite b ist über den gesamten Umfang des Spaltes 23 konstant. Somit kann die Hülle exakt mit konstanter Dicke hergestellt werden. Hierzu weist der Bereich 24 der Extrusionsdüse 22, der zusammen mit dem Füllrohr 21 den Extrusionsspalt 23 bildet eine Öffnung auf, die einen zu der Form des Füllrohrs 21 im Wesentlichen komplementär geformten Ausschnitt aufweist, der das Füllrohr 21 aufnehmen kann, so dass sich zwischen dem Füllrohr 21 und der Extrusionsdüse 22, d.h. hier der Wandung 24 der Extrusionsspalt 23 ausbilden kann. Durch eine derartige Ausgestaltung des Extrudierkopfes 2 kann ein Wurststrang mit beliebiger Außengeometrie geformt werden. Fig. 5 zeigt derartig geformte Wurststränge 1, die eine nicht-zylindrische Außenkontur aufweisen.

Fig. 3 zeigt eine weitere Ausführungsform gemäß der vorliegenden Erfindung, die im Wesentlichen der in Fig. 2a gezeigten Ausführungsform entspricht. In Fig. 3 ist einfachheitshalber kein Gehäuse gezeigt, in dem die Extrudierdüse 23 drehbar gelagert ist, es könnte jedoch auch in dieser Ausführungsform die Düse 22 zusammen mit dem Füllrohr 21 um die Achse A drehbar gelagert sein. Der wesentliche Unterschied zwischen den in Fig. 2 und 3 gezeigten Extrudierköpfen besteht darin, dass hier ein Teil der Extrudierdüse 22, nämlich hier die Wandung 24, das Ausstoßende 21 a des Füllrohrs 21 übergreift. Hier ist die Wandung 24 z.B. als Ringscheibe ausgebildet. Der dadurch zwischen dem übergreifenden Bereich der Wandung 24 und dem Ausstoßende des Füllrohrs 21 gebildete Extrusionsspalt 23, also dem Austrittsspalt, erstreckt sich, wie in Fig. 3 gezeigt ist und insbesondere aus Fig. 3b hervorgeht, parallel zur Längsachse A des Füllrohrs und weist hier eine Spaltbreite c auf. Auch hier ist der Abstand c zwischen Füllrohr 21 und Extrudierdüse 22 über den gesamten Umfang des Spaltes konstant, so dass ein homogener Ausstoß des Hüllenmaterials möglich ist. Vorzugsweise ist auch der Abstand b zwischen Füllrohr und Extrusionsdüse 22 senkrecht zur Achse A über den Umfang konstant. Maß b und Maß c (bzw. alle anderen Abstandsmaße) müssen nicht gleich sein, aber jedes für sich gleichbleibend am Umfang.

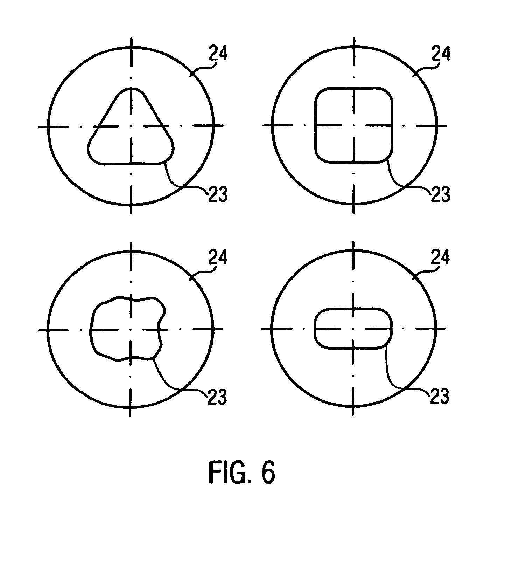

In gleicher Weise wie bei dem in Fig. 2 gezeigten Ausführungsbeispiel weist das Füllrohr, wie auch aus Fig. 4 hervorgeht, zumindest im Bereich des Ausstoßendes 21 a eine von der Kreisform abweichende Querschnittsform auf. Auch hier hat der Teil der Extrusionsdüse 22, der zusammen mit dem Füllrohr 21 den Extrusionsspalt 23 bildet, hier beispielsweise die Ringscheibe 24, eine im Wesentlichen komplementär geformte Aussparung, so dass das Füllrohr in die Extrudierdüse 22 derart weit eingeschoben werden kann, dass sich eine gewünschte Spaltbreite c in Axialrichtung zwischen Füllrohr 21 und Wandung 24 ergibt und darüber hinaus auch in Radialrichtung ein ausreichender Abstand zwischen Füllrohr 21 und dem übergreifenden Bereich 24 der Extrusionsdüse 22 entsteht, so dass Hüllenmaterial aus dem Hohlraum 25 zwischen Füllrohr 21 und Wandung 24 austreten kann. Fig. 6 zeigt einen Schnitt entlang der Linie II-II der Fig. 3a, wobei deutlich die von der Kreisform abweichende Querschnittsform des Spalts zu erkennen ist. In vorteilhafter Weise sind daher Füllrohr 21 und Extrusionsdüse 22 in Axialrichtung, d.h. entlang der Achse A des Füllrohrs zueinander verschiebbar. Somit können Wursthüllenmassen mit unterschiedlicher Konsistenz verarbeitet werden und unterschiedlich dicke Wursthüllen erzeugt werden. Durch die axiale Relativbewegung zwischen Extrusionsdüse 22 und Füllrohr 21 behält auch die Breite c des Extrusionsspaltes 23, d.h. des Austrittsspaltes eine um den Umfang konstante Abmessung.

Verschiedene Dicken der Wursthülle können auch dadurch erreicht werden, dass die Zufuhr der Wursthüllenmasse durch Druck- oder Mengenregelung verändert wird.

Bei dem erfindungsgemäßen Verfahren wird im Gegensatz zum Stand der Technik ein Wurststrang mit einer nicht kreisförmigen Querschnittsform dadurch erzeugt, dass die pastöse Masse durch ein Ausstoßende des Füllrohrs in einer von der Kreisform abweichenden Querschnittsform ausgestoßen wird und gleichzeitig eine die Masse umgebende Hülle in einer entsprechenden Form um die pastöse Masse ausgestoßen wird. Dabei wird über eine Zufuhr 26 und einen Hohlraum 25 in der Extrusionsdüse 22 Hüllenmaterial durch den Extrusionsspalt 23, d.h. den Austrittsspalt der Extrusionsdüse 22 auf die ausgestoßene pastöse Masse extrudiert. Da der Extrusionsspalt eine Form aufweist, die im Querschnitt, d.h. senkrecht zur Achse A eine der pastösen ausgestoßenen Masse entsprechende Form aufweist, hat auch das ausgestoßene Hüllenmaterial eine entsprechende komplementäre Form und kann sich so exakt um das ausgestoßene Gut legen, so dass eine Wurst mit beliebiger geometrischer Außenkontur hergestellt wird. Das Hüllenmaterial muss dann, wie vorher beschrieben, noch durch die Verfestigungseinrichtung 3 verfestigt werden.

Gemäß einer besonderen Ausführungsform der vorliegenden Erfindung ist das Füllrohr 21 zusammen mit der Extrudierdüse 22 um die Achse A drehbar gelagert. Dabei kann der Extrudierkopf gegenüber dem bereits erzeugten Wurststrang durch eine Antriebseinrichtung 7 um die Achse A gedreht werden und durch eine nicht gezeigte, in Transportrichtung nachgeordnete Transporteinrichtung kann der verdrillte Wurststrang gegen Verdrehen gehalten werden. Das Füllrohr und die Extrudiereinrichtung 2 können jedoch auch fest angeordnet sein, wobei dann in Transportrichtung des pastösen Gutes nach der Verfestigungseinrichtung 3 eine Anordnung zum Drehen des Stranges um die Achse A angeordnet sein kann. So kann der erzeugte Wurststrang, der eine von der Zylinderform abweichende Querschnittsform abweicht, um die Längsachse verdreht werden, so dass beispielsweise eine wie in Fig. 5 gezeigte Drillwurst entstehen kann, die eine besonders ansprechende Form aufweist. Die Verfestigung des Wurststranges findet dann vor und während des Verdrehens statt.

Die vorliegende Erfindung ist nicht nur für Wurstprodukte geeignet, sie kann auch zur Herstellung anderer Nahrungsmittel, z.B. Käse etc. verwendet werden.

## Patentansprüche

1. Vorrichtung zum Herstellen eines Wurststrangs (1) aus einer pastösen Masse, insbesondere Wurstbrät mit
einem Koextrusionskopf (2) zum Koextrudieren der pastösen Masse und
einer die Masse umgebenden Hülle,
wobei der Koextrusionskopf (2) ein Füllrohr (21) zum Ausstoßen der pastösen Masse sowie eine dem Füllrohr (21) zugeordnete Extrusionsdüse (22) mit einem Extrusionsspalt (23) zum Ausstoßen des Hüllenmaterials umfasst,
das Füllrohr (21) zumindest im Bereich des Ausstoßendes (21 a) eine von der Kreisform abweichende Querschnittsform und der Extrusionsspalt (23) eine entsprechende, von der Kreisform abweichende Querschnittsform aufweist, **dadurch gekennzeichnet, dass**
die Extrudierdüse (22) derart um das Ausstoßende (21a) des Füllrohrs (21) angeordnet ist, dass der Extrusionsspalt (23) zwischen dem Füllrohr (21) und einer Wandung (24) der Extrudierdüse (22) gebildet ist, wobei
die Wandung (24) eine Öffnung aufweist, die eine zu der Form des Füllrohrs (21) im wesentlichen komplementäre Form aufweist und die das Füllrohr (21) aufnimmt.

2. Vorrichtung nach Anspruch 1 **dadurch gekennzeichnet, dass** der Extrusionsspalt (23) zwischen Füllrohr (21) und Wandung (24) über den gesamten Umfang gleiche Breite (b, c) aufweist.

3. Vorrichtung nach mindestens einem der Ansprüche 1-2, **dadurch gekennzeichnet, dass** die Querschnittsform des Füllrohrs dreiecksförmig, quadratisch, n-eckig, oval oder unregelmäßig ausgebildet ist

4. Vorrichtung nach mindestens einem der Asprüche 1-3, **dadurch gekennzeichnet, dass** das Füllrohr (21) und die Extrusionsdüse (22) axial zueinander verschiebbar zur Einstellung der Breite des Extrusionsspalts (23) sind.

5. Vorrichtung nach mindestens einem der Ansprüche 1-4, **dadurch gekennzeichnet, dass** die Extrusionsdüse (22) zusammen mit dem Füllrohr (21) drehbar gelagert ist

6. Verfahren zum Herstellen eines Wurststrangs 1 aus pastöser Masse mit einer nichtkreisförmigen Querschnittsform, **dadurch gekennzeichnet, dass**
. die pastöse Masse durch ein Füllrohr (21) mit einer zumindest im Bereich des Ausstoßendes von der Kreisform abweichenden Querschnittsform ausgestoßen wird und
. gleichzeitig eine die Masse umgebende Hülle durch eine Extrusionsdüse (22) in einer entsprechenden Form um die ausgestoßene pastöse Masse durch einen Extruslonsspalt (23) extrudiert wird,wobei der Extrusionsspalt (23) zwischen dem Füllrohr (21) und einer Wandung (24) der Extrusionsdüse angeordnet ist und die Wandung (24) eine Öffnung aufweist, die eine zu der Form des Füllrohrs (21) im wesentlichen komplementäre Form aufweist und die das Füllrohr (21) aufnimmt, und
. die umgebende Hülle ausgehärtet wird.

7. Verfahren nach Anspruch 6, **dadurch gekennzeichnet, dass** die Dicke der Hülle durch Einstellen der Breite eines Extrusionsspalts (23) der Extrusionsdüse (22) oder durch die Zufuhr des Hüllenmaterials durch Druck oder Mengenregelung eingestellt wird.

8. Verfahren nach Anspruch 6 oder 7, **dadurch gekennzeichnet, dass** der erzeugte Wurststrang (1) um seine Längsachse A verdrillt wird.

## Claims

1. A device for the manufacture of a sausage skein (1) from a paste mass, in particular sausage meat with
a coextrusion head (2) for coextruding the paste mass and a casing enclosing the mass,
the coextrusion head (2) comprising a filling tube (21) for the ejection of the paste mass and an extrusion die (22) assigned to the filling tube (21) with an extrusion gap (23) for ejecting the casing material,
the filling tube (21) comprising at least in the region of the ejection end (21 a) a cross-sectional shape deviating from the circular shape, and the extrusion gap (23) comprising a corresponding cross-sectional shape deviating from the circular shape,
**characterised in that**
the extrusion die (22) is arranged around the ejection end (21 a) of the filling tube (21) such that the extrusion gap (23) is formed between the filling tube (21) and a wall (24) of the extrusion die (22),
the wall (24) comprising an opening which has a shape substantially complementary to the shape of the filling tube (21) and which accommodates the filling tube (21).

2. The device according to Claim 1, **characterised in that** the extrusion gap (23) between the filling tube (21) and the wall (24) exhibits the same width (b, c) over the complete circumference.

3. The device according to at least one of the Claims 1-2, **characterised in that** the cross-sectional shape of the filling tube is triangular, quadriform, n-sided, oval or irregular.

4. The device according to at least one of the Claims 1-3, **characterised in that** the filling tube (21) and the extrusion die (22) can be moved axially relative to one another for adjusting the width of the extrusion gap (23).

5. The device according to at least one of the Claims 1-4, **characterised in that** the extrusion die (22) is rotatably supported together with the filling tube (21).

6. A method for the manufacture of a sausage skein 1 from paste mass with a non-circular cross-sectional shape, **characterised in that**
- the paste mass is ejected through a filling tube (21) with, at least in the region of the ejection end, a cross-sectional shape deviating from the circular shape, and
- simultaneously a casing enclosing the mass is extruded through an extrusion die (22) in a corresponding shape around the ejected paste mass, the extrusion gap (23) being formed between the filling tube (21) and a wall (24) of the extrusion die, and the wall (24) comprising an opening which has a shape substantially complementary to the shape of the filling tube (21) and which accommodates the filling tube (21), and
- the enclosing casing is consolidated.

7. The method according to Claim 6, **characterised in that** the thickness of the casing is adjusted by setting the width of an extrusion gap (23) of the extrusion die (22) or through the feed of the casing material by pressure or quantity control.

8. The method according to Claim 6 or 7, **characterised in that** the produced sausage skein (1) is twisted about its longitudinal axis A.

## Revendications

1. Dispositif de fabrication d'un cordon de saucisse (1) en une masse pâteuse, en particulier en chair à saucisse comportant
une tête de coextrusion (2) pour coextruder la masse pâteuse et
une enveloppe entourant la masse,
dans lequel la tête de coextrusion (2) comprend un tube de remplissage (21) pour expulser la masse pâteuse ainsi qu'une filière d'extrusion (22) associée au tube de remplissage (21) comportant une fente d'extrusion (23) pour expulser le matériau d'enveloppe,
le tube de remplissage (21) comporte au moins dans la zone de l'extrémité d'expulsion (21a) une forme de section transversale différant de la forme circulaire et la fente d'extrusion (23) présente une forme correspondante différant de la forme circulaire,
**caractérisé en ce que** la filière d'extrusion (22) est disposée autour de l'extrémité d'expulsion (21a) du tube de remplissage (21), de telle façon que la fente d'extrusion (23) est formée entre le tube de remplissage (21) et une paroi (24) de la filière d'extrusion (22),
la paroi (24) comportant une ouverture qui présente une forme essentiellement complémentaire de la forme du tube de remplissage (21) et qui reçoit le tube de remplissage (21).

2. Dispositif selon la revendication 1, **caractérisé en ce que** la fente d'extrusion (23) entre tube de remplissage (21) et paroi (24) présente la même largeur (b, c) sur l'ensemble du pourtour.

3. Dispositif selon au moins une des revendication 1-2, **caractérisé en ce que** la forme de section transversale du tube de remplissage est réalisée de forme triangulaire, carrée, polygonale, ovale ou irrégulière.

4. Dispositif selon au moins une des revendication 1-3, **caractérisé en ce que** le tube de remplissage (21) et la filière d'extrusion (22) sont capables de translation axiale l'un par rapport à l'autre pour régler la largeur de la fente d'extrusion (23).

5. Dispositif selon au moins une des revendication 1-4, **caractérisé en ce que** la filière d'extrusion (22) est supportée pour pouvoir tourner conjointement avec le tube de remplissage (21).

6. Procédé de fabrication d'un cordon de saucisse (1) en masse pâteuse, présentant une forme de section transversale non circulaire, **caractérisé en ce que**
- la masse pâteuse est expulsée à travers un tube de remplissage (21) comportant, au moins dans la zone de l'extrémité d'expulsion, une forme de section transversale différant de la forme circulaire et
- simultanément, une enveloppe entourant la masse est extrudée autour de la masse pâteuse expulsée, dans une forme correspondante, par une fente d'extrusion (23) à travers une filière d'extrusion (22), la fente d'extrusion (23) étant disposée entre le tube de remplissage (21) et une paroi (24) de la filière d'extrusion, et la paroi (24) comportant une ouverture qui présente une forme essentiellement complémentaire de la forme du tube de remplissage (21) et qui reçoit le tube de remplissage (21) et
- l'on fait durcir l'enveloppe.

7. Procédé selon la revendication 6, **caractérisé en ce que** l'épaisseur de l'enveloppe est réglée par réglage de la largeur d'une fente d'extrusion (23) de la filière d'extrusion (22) ou par l'amenée du matériau d'enveloppe par pression ou régulation du volume.

8. Procédé selon la revendication 6 ou 7, **caractérisé en ce que** l'on vrille le cordon de saucisse (1) produit autour de son axe longitudinal A.
